**Europäisches Patentamt**

**European Patent Office**

**Office européen des brevets**

(11) Veröffentlichungsnummer: **0 305 733 B1**

(12) # EUROPÄISCHE PATENTSCHRIFT

(45) Veröffentlichungstag der Patentschrift:
18.09.91 Patentblatt 91/38

(51) Int. Cl.$^5$: **G01F 3/10**

(21) Anmeldenummer: **88112111.5**

(22) Anmeldetag: **27.07.88**

(54) **Volumenzähler.**

(30) Priorität: **29.08.87 DE 3728938**

(43) Veröffentlichungstag der Anmeldung:
**08.03.89 Patentblatt 89/10**

(45) Bekanntmachung des Hinweises auf die
Patenterteilung:
**18.09.91 Patentblatt 91/38**

(84) Benannte Vertragsstaaten:
**DE FR GB IT**

(56) Entgegenhaltungen:
**DE-A- 2 554 466**
**DE-A- 3 147 208**

(73) Patentinhaber: **Firma KRACHT GmbH.**
**Gewerbestrasse 20**
**W-5980 Werdohl (DE)**

(72) Erfinder: **Kramer, Friedhelm, Dipl.-Ing.**
**Unterm Hunnenbrink 1**
**W-5952 Attendorn (DE)**
Erfinder: **Weber, Werner, Dipl.-Ing.**
**Feldstrasse 102**
**W-5980 Werdohl (DE)**
Erfinder: **Koscielny, Josef**
**Schulstrasse 17 a**
**W-5980 Werdohl (DE)**

(74) Vertreter: **Dörner, Lothar, Dipl.-Ing.**
**Stresemannstrasse 15**
**W-5800 Hagen 1 (DE)**

## Beschreibung

### Technisches Gebiet :

Die Erfindung betrifft einen Volumenzähler, dessen Meßwerk aus einem Zahnradpaar besteht und in dessen von einem Deckel verschlossenen Gehäuse für jedes mit einem spielarmen Lager versehene Zahnrad eines Zahnradpaares eine Radkammer gebildet ist.

Volumenzähler haben die Aufgabe, ein Volumen bzw. einen Volumenstrom mit hoher Genauigkeit bei geringem Druckverlust zu messen. Das Meßwerk des Volumenzählers besteht aus einem Zahnradpaar. Es wird nach dem Verdrängerprinzip eines Zahnradölmotors vom Flüssigkeitsstrom angetrieben.

### Stand der Technik :

Bekannte Volumenzähler (vgl. z.B. DE-A-2554466 und DE-A-3147208 weisen zur Lagerung der Zahnräder ——der Verdrängungskörper—— ein spielarm eingestelltes Kugellager auf. Hierdurch wird ein geringes Spiel zwischen Verdrängungskörpern und Gehäuseteilen, ein reibungsarmer Lauf bei niedrigen Drehzahlen sowie große Meßgenauigkeit in einem weiten Durchflußbereich erzielt.

Beim Einsatz in hochviskosen, aushärtenden oder abrasiven Flüssigkeiten erreicht der Volumenzähler mit Kugellagerpaar jedoch keine zufriedenstellenden Ergebnisse : Bei hochviskosen Flüssigkeiten ist der Druckverlust des Volumenzählers zu groß, während aushärtende und/oder abrasive Medien das kugelgelagerte Meßwerk blockieren bzw. vorzeitig verschleißen.

### Darstellung der Erfindung :

Hier will die Erfindung Abhilfe schaffen. Der Erfindung liegt die Aufgabe zugrunde, einen Volumenzähler mit einer solchen Lagerung zu schaffen, daß auch bei hochviskosen, aushärtenden, mit Füllstoffen versehenen und/oder abrasiven Flüssigkeiten genaue Meßergebnisse erzielt werden. Gemäß der Erfindung wird diese Aufgabe dadurch gelöst, daß jedes Lager als kombiniertes radial und axial wirkendes Gleitlager ausgebildet ist, wobei die axiale Lagerung mit eingestelltem, definiertem Spiel erfolgt.

Versuche haben gezeigt, daß eine Verbesserung der eingangs erwähnten nicht zufriedenstellenden Meßergebnisse erreicht wird, wenn jedes Lager als radiale Gleitlagerbuchse ausgeführt ist. Der Nachteil dieser Lösung ist jedoch die fehlende Führung der Verdrängungskörper in axialer Richtung. Dadurch können z.B. in Folge von Strömungs- und Magnetkräften die Verdrängungskörper die Gehäuseteile berühren. Die dadurch auftretende Reibung und wechselnden Spalte führen im unteren und mittleren Durchflußbereich zu großen Ungenauigkeiten und somit zu falschen Meßwerten. Darüberhinaus können die Verwendung von Werkstoffen mit schlechten Gleiteigenschaften und Flüssigkeiten mit geringer Schmierfähigkeit zum Fressen der Gleitflächen und zum Ausfall des Volumenzählers führen.

Anders bei der Erfindung. Das Gleitlager ist sowohl radial als auch axial geführt. Die Verdrängungskörper sind reibungsarm und axial mit eingestelltem definiertem Spiel gelagert. Sie berühren in allen Arbeitspunkten des Volumenzählers nicht die umgebenden Gehäuseteile. Damit verbundene Reibung und wechselnde Spalte sind vermieden. Die bei den Verdrängungskörpern nach der Erfindung verwendeten Gleitlager ermöglichen, den Volumenzähler auch mit den eingangs erwähnten problematischen Flüssigkeiten zu betreiben, für die die bisherigen Lager nicht geeignet sind. Volumenzählern werden damit neue Einsatzgebiete erschlossen.

Ausgestaltungen und Weiterbildungen der Erfindung sind in den abhängigen Ansprüchen angegeben.

### Kurze Beschreibung der Zeichnung :

Ausführungsbeispiele der Erfindung sind in der Zeichnung dargestellt und werden im folgenden näher beschrieben. Es zeigen :

| | |
|---|---|
| Fig. 1a und 1c | Axialschnitte durch ein Zahnrad — einen Verdrängungskörper — eines Volumenzählers mit Lagerbuchse und Anlaufscheibe ; |
| Fig. 1b | eine Einzelheit aus Fig. 1a ; |
| Fig. 1d | die Ansicht der Gehäuse-Seitenfläche des in Fig. 1c dargestellten Volumenzählers, die die Radkammern enthält ; |
| Fig. 2a und 2b | den Fig. 1a und 1c entsprechende Axialschnitte, jedoch ohne Anlaufscheibe ; |
| Fig. 3a bis 3d | den Fig. 1a und 1c entsprechende Axialschnitte, jedoch ohne Anlaufscheibe und Lagerbuchse. |

Bester Weg zur Ausführung der Erfindung :

Alle als Ausführungsbeispiel gewählten Volumenzähler weisen ein Gehäuse 1 auf, das von einem Deckel 2 verschlossen ist. Ausgehend von seiner durch den Deckel 2 verschlossenen Stirnseite 11 sind in das Gehäuse 1 Radkammern 12 eingebracht. Jede Radkammer 12 nimmt ein Zahnrad 3— einen Verdrängungskörper — eines Zahnradpaares auf. Jedes Zahnrad 3 ist in dem Gehäuse 1 gelagert.

Das Lager für jedes Zahnrad 3 ist als kombiniertes radial und spieleinstellbar axial wirkendes Gleitlager ausgebildet. In eine Bohrung 13 des Gehäuses 1 ist ein Lagerstift 9 gedrückt. Der Lagerstift 9 durchsetzt die Radkammer 12 und endet in einer Bohrung 23 des Deckels 2.

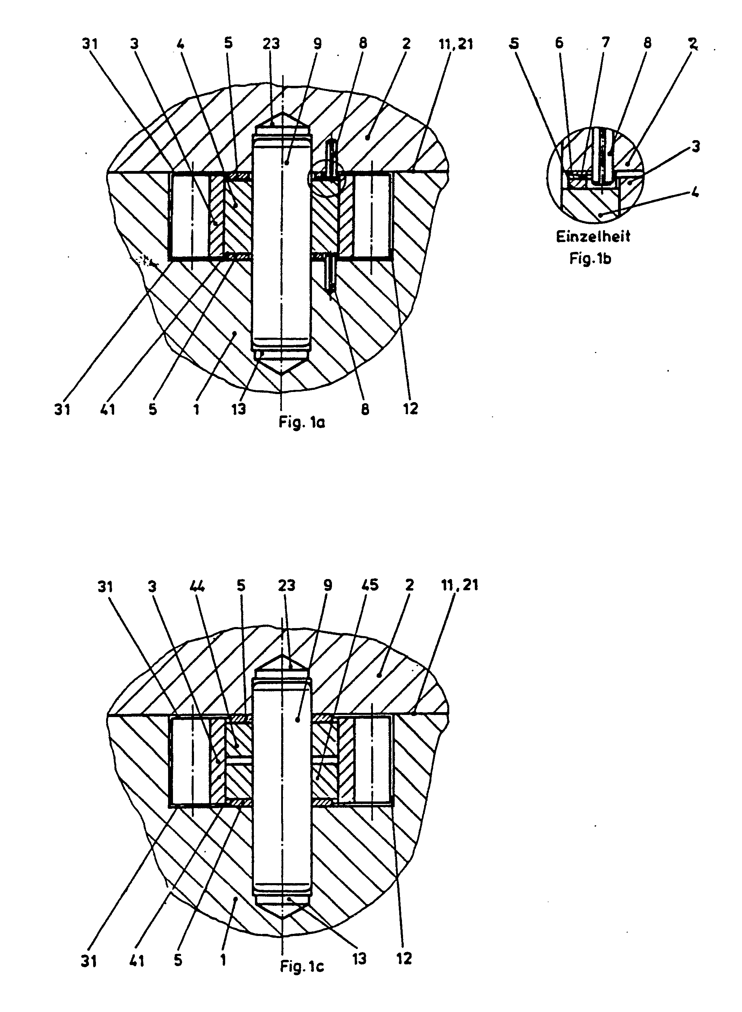

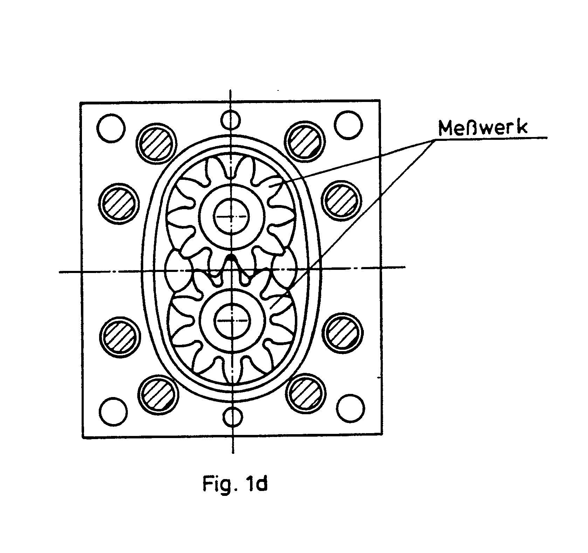

Bei den in den Fig. 1a bis 1d dargestellten Ausführungsbeispielen ist jedes Zahnrad 3 mittels einer in das Zahnrad gedrückten um den Lagerstift 9 angeordneten Lagerbuchse 4 radial gelagert. Axial ist jedes Zahnrad 3 mittels Anlaufscheiben 5 gelagert. Die Anlaufscheiben 5 sind zwischen den Stirnflächen 41 der eingedrückten Lagerbuchse 4 und den Stirnseiten 11, 21 des Gehäuses 1 bzw. des Deckels 2 angeordnet. Wie in Fig. 1b dargestellt ist, können unter den Anlaufscheiben 5 Ausgleichscheiben 6, 7 vorgesehen sein. Die Anlaufscheiben 5 sind mit dem Gehäuse 1 oder dem Lagerstift 9 entweder kraftschlüssig, z.B. durch Kleben, Pressen, oder formschlüssig, z.B. durch einen Stift 8, Nasen, Ausnehmungen, verbunden und so gegen Verdrehen gesichert.

Zur genauen axialen Fixierung jedes Zahnrads 3 werden die Lagerbuchse 4 und/oder die Anlaufscheiben 5 in angepaßten Dicken gefertigt ; oder das Lager- und Seitenspiel wird durch die Ausgleichscheiben 6, 7 unter den Anlaufscheiben 5 eingestellt, wie es Fig. 1a und 1b zeigen. Eine genaue Axial-Lagerspieleinstellung ist auch möglich, wenn für jede Lagerstelle die Lagerbuchse 4 in Buchsenteile 44, 45 aufgeteilt ist. Die Buchsenteile 44, 45 werden mit definiertem Seitenabstand zu den Anlaufscheiben 5 in das Zahnrad 3 eingesetzt.

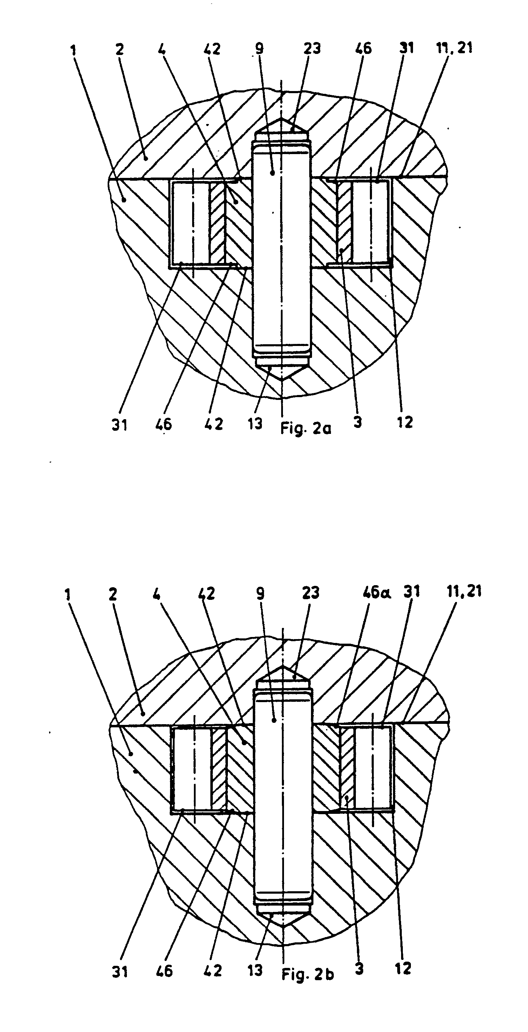

Eine vereinfachte Ausführung der axialen Lagerung zeigen die Fig. 2a und 2b. Bei diesen vereinfachten Ausführungen ist auf Anlaufscheiben verzichtet. Jedes Zahnrad 3 ist mit den den Stirnseiten 11, 21 von Gehäuse 1 und Deckel 2 benachbarten Stirnflächen der Lagerbuchse 4 axial gelagert. Jede Stirnfläche der Lagerbuchse 4 ist um den Lagerstift 9 als kreisringförmige Anlagefläche 42 ausgebildet. Es wird also nur ein begrenzter Ring um die Lagerbohrung als axiale Gleitfläche genutzt, wodurch die Anlaufreibung reduziert wird. Bei dem in Fig. 2a dargestellten Ausführungsbeispiel ist die Lagerbuchse 4 an jeder Stirnfläche im Randbereich mit einer ringförmigen Ausnehmung 46 versehen. Die Ebene der Ausnehmung 46, die parallel zur Stirnfläche der Lagerbuchse 4 verläuft, liegt in der Ebene der zugeordneten Seitenfläche 31 des Zahnrads 3. Bei dem in Fig. 2b dargestellten Ausführungsbeispiel ist jede Stirnfläche der Lagerbuchse 4 zwischen Anlagefläche 42 und Rand bis zu der von der zugeordneten Seitenfläche 31 des Zahnrads 3 bestimmten Ebene abgeschrägt (46a).

Eine noch weiter vereinfachte Lagerausführung zeigen die Fig. 3a bis 3d. Bei diesen Ausführungen ist jedes Zahnrad 3 mittels einer in ihm vorgesehenen, um den Lagerstift 2 angeordneten Lagerbohrung 33 radial gelagert. Jedes Zahnrad 3 ist außerdem mit seinen an den Stirnseiten 11, 21 von Gehäuse 1 und Deckel 2 anliegenden Seitenflächen 31 axial gelagert. Jede Seitenfläche 31 des Zahnrads 3 ist um den Lagerstift 9 als kreisringförmige Anlagefläche 32 ausgebildet.

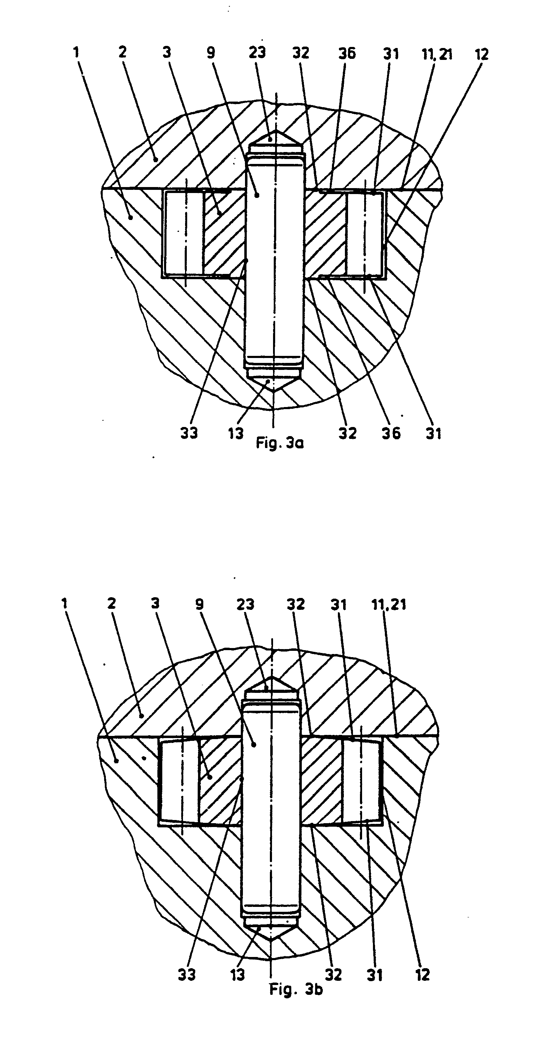

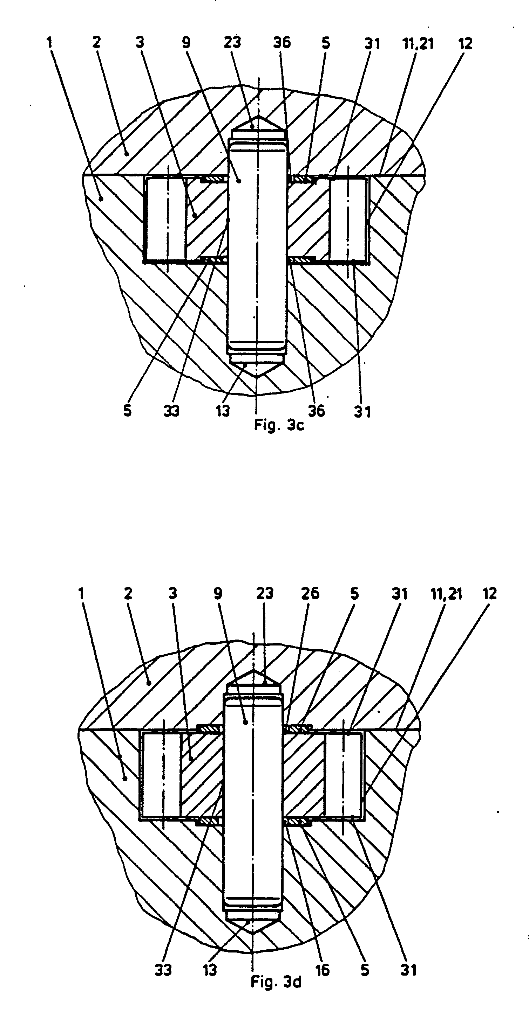

Bei dem in Fig. 3a dargestellten Ausführungsbeispiel ist das Zahnrad 3 an jeder Seitenfläche 31 im Randbereich mit einer ringförmigen Ausnehmung 36 versehen. Bei dem in Fig. 3b dargestellten Ausführungsbeispiel ist jede Seitenfläche 31 des Zahnrads 3 zwischen Anlagefläche 32 und Rand abgeschrägt. Bei dem in Fig. 3c und 3d dargestellten Ausführungsbeispiel ist jedes Zahnrad 3 wiederum mit Hilfe von Anlaufscheiben 5 axial gelagert. Die Anlaufscheiben 5 sind zwischen den Seitenflächen 31 des Zahnrads 3 und den Stirnseiten 11, 21 des Gehäuses 1 bzw. des Deckels 2 angeordnet. Dabei weisen die Seitenflächen 31 des Zahnrads 3 oder die Stirnseiten 11, 21 des Gehäuses 1 bzw. des Deckels 2 ringförmige Ausnehmungen 36, 16, 26 für die Aufnahme der Anlaufscheiben 5 auf.

Die Werkstoffwahl des Zahnrads 3, des Lagerstifts 9, des Gehäuses 1 und des Deckels 2 ist abhängig vom Einsatz des Volumenzählers, seiner Drehzahl und des Durchflußwiderstandes. Je nach Anforderung können die Lagerteile, die zweckmäßig aus harten bzw. gehärteten Werkstoffen bestehen, durch extrem harte Verschleißschutzschichten mit guten Gleiteigenschaften, z.B. TiN, TiC, Eloxal, zusätzlich behandelt werden. Hierdurch wird außerdem ein verbesserter Korrosionsschutz erreicht.

Gewerbliche Verwertbarkeit :

Verwendung zur Messung eines Volumens bzw. eines Volumenstroms, insbesondere bei den eingangs genannten hochviskosen, aushärtenden, mit Füllstoffen versehenen und/oder abrasiven Flüssigkeiten.

**Patentansprüche**

1. Volumenzähler, dessen Meßwerk aus einem Zahnradpaar besteht und in dessen von einem Deckel (2) verschlossenen Gehäuse (1) für jedes mit einem spielarmen Lager versehene Zahnrad (3) eines Zahnradpaares eine Radkammer (12) gebildet ist, dadurch gekennzeichnet, daß jedes Lager als kombiniertes radial und axial wirkendes Gleitlager ausgebildet ist, wobei die axiale Lagerung mit eingestelltem, definiertem Spiel erfolgt.

2. Volumenzähler nach Anspruch 1, dadurch gekennzeichnet, daß jedes Zahnrad (3) mittels eines in das Gehäuse (1) gedrückten, die Radkammer (12) durchsetzenden Lagerstifts (9) und einer in das Zahnrad (3) gedrückten, um den Lagerstift (9) angeordneten Lagerbuchse (4) radial gelagert ist.

3. Volumenzähler nach Anspruch 1, dadurch gekennzeichnet, daß jedes Zahnrad (3) mittels eines in das Gehäuse (1) gedrückten, die Radkammer (12) durchsetzenden Lagerstifts (9) und einer in dem Zahnrad (3) vorgesehenen, um den Lagerstift (9) angeordneten Lagerbohrung (33) radial gelagert ist.

4. Volumenzähler nach Anspruch 2, dadurch gekennzeichnet, daß jedes Zahnrad (3) mit den den Stirnseiten (11, 21) von Gehäuse (1) und Deckel (2) benachbarten Stirnflächen (41) der Lagerbuchse (4) axial gelagert ist.

5. Volumenzähler nach Anspruch 4, dadurch gekennzeichnet, daß jede Stirnfläche der Lagerbuchse (4) um den Lagerstift (9) als kreisringförmige Anlagefläche (42) ausgebildet ist.

6. Volumenzähler nach Anspruch 5, dadurch gekennzeichnet, daß die Lagerbuchse (4) an jeder Stirnfläche im Randbereich mit einer ringförmigen Ausnehmung (46) versehen ist, deren parallel zur Stirnfläche verlaufende Ebene in der zugeordneten Seitenfläche (31) des Zahnrads (3) liegt.

7. Volumenzähler nach Anspruch 5, dadurch gekennzeichnet, daß jede Stirnfläche der Lagerbuchse (4) zwischen Anlagefläche (42) und Rand bis zu der von der zugeordneten Seitenfläche (31) des Zahnrads (3) bestimmten Ebene abgeschrägt ist.

8. Volumenzähler nach Anspruch 3, dadurch gekennzeichnet, daß jedes Zahnrad (3) mit seinem an den Stirnseiten (11, 21) von Gehäuse (1) und Deckel (2) anliegenden Seitenflächen (31) axial gelagert ist.

9. Volumenzähler nach Anspruch 8, dadurch gekennzeichnet, daß jede Seitenfläche (31) des Zahnrads (3) um den Lagerstift (9) als kreisringförmige Anlagefläche (32) ausgebildet ist.

10. Volumenzähler nach Anspruch 9, dadurch gekennzeichnet, daß das Zahnrad (3) an jeder Seitenfläche (31) im Randbereich mit einer ringförmigen Ausnehmung (36) versehen ist.

11. Volumenzähler nach Anspruch 9, dadurch gekennzeichnet, daß jede Seitenfläche (31) des Zahnrads (3) zwischen Anlagefläche (32) und Rand abgeschrägt ist.

12. Volumenzähler nach Anspruch 2, dadurch gekennzeichnet, daß jedes Zahnrad (3) mittels Anlaufscheiben (5) axial gelagert ist, die zwischen den Stirnflächen (41) der eingedrückten Lagerbuchse (4) und den Stirnseiten (11, 21) des Gehäuses (1) bzw. des Deckels (2) angeordnet sind.

13. Volumenzähler nach Anspruch 12, dadurch gekennzeichnet, daß die Lagerbuchse (4) in Axialrichtung zweigeteilt mit definiertem Abstand zwischen den Buchsenteilen (44, 45) ausgeführt ist.

14. Volumenzähler nach Anspruch 3, dadurch gekennzeichnet, daß jedes Zahnrad (3) mittels Anlaufscheiben (5) axial gelagert ist, die zwischen den Seitenflächen (31) des Zahnrads (3) und den Stirnseiten (11, 21) des Gehäuses (1) bzw. des Deckels (2) angeordnet sind, wobei die Seitenflächen (31) des Zahnrads (3) oder die Stirnseiten (11, 21) des Gehäuses (1) bzw. des Deckels (2) eine ringförmige Ausnehmung (36, 16, 46) für die Aufnahme der Anlaufscheiben (5) aufweisen.

15. Volumenzähler nach einem der Ansprüche 12 bis 14, dadurch gekennzeichnet, daß unter den Anlaufscheiben (5) Ausgleichscheiben (6, 7) vorgesehen sind.

16. Volumenzähler nach einem der Ansprüche 12 bis 15, dadurch gekennzeichnet, daß die Anlaufscheiben (5) mit dem Gehäuse (1) oder dem Lagerstift (9) kraftschlüssig verbunden sind.

17. Volumenzähler nach einem der Ansprüche 12 bis 15, dadurch gekennzeichnet, daß die Anlaufscheiben (5) mit dem Gehäuse (1) oder dem Lagerstift (9) formschlüssig verbunden sind.

18. Volumenzähler nach einem der Ansprüche 1 bis 17, dadurch gekennzeichnet, daß die Teile des Lagers aus harten bzw. gehärteten Werkstoffen bestehen.

19. Volumenzähler nach Anspruch 18, dadurch gekennzeichnet, daß die Teile des Lagers durch extrem harte Verschleißschutzschichten mit guten Gleiteigenschaften zusätzlich behandelt sind.


**Claims**

1. Volumeter whose meter movement comprises a gearwheel pair and in whose housing (1) closed with a cover (2) one wheel chamber (12) is formed for each gearwheel (3) provided with a low-clearance bearing, characterised in that each bearing is in the form of a combined radial- and axial-action sliding bearing, with the axial bearing action being effected with an adjusted defined clearance.

2. Volumeter according to claim 1, characterised in that each gearwheel (3) is radially supported by means of a bearing pin (9), which is pressed into the housing (1) and passes through the wheel chamber (12), and a bearing bush (4), which is pressed into the gearwheel (3) and is disposed around the bearing pin (9).

3. Volumeter according to claim 1, characterised in that each gearwheel (3) is radially supported by means of a bearing pin (9), which is pressed into the housing (1) and passes through the wheel chamber (12), and a bearing bore (33), which is provided in the gearwheel (3) and is disposed around the bearing pin (9).

4. Volumeter according to claim 2, characterised in that each gearwheel (3) is axially supported by the faces (41) of the bearing bush (4) adjacent to the faces (11, 21) of the housing (1) and cover (2).

5. Volumeter according to claim 4, characterised in that each face of the bearing bush (4) around the bearing pin (9) is in the form of an annular locating face (42).

6. Volumeter according to claim 5, characterised in that the bearing bush (4) is provided at each face in the edge region with an annular recess (46), whose plane extending parallel to the face lies in the associated side face (31) of the gearwheel (3).

7. Volumeter according to claim 5, characterised in that each face of the bearing bush (4) between locating face (42) and edge is bevelled up to the plane defined by the associated side face (31) of the gearwheel (3).

8. Volumeter according to claim 3, characterised in that each gearwheel (3) is axially supported by its side faces (31) lying adjacent to the faces (11, 21) of the housing (1) and cover (2).

9. Volumeter according to claim 8, characterised in that each side face (31) of the gearwheel (3) around the bearing pin (9) is in the form of an annular locating face (32).

10. Volumeter according to claim 9, characterised in that the gearwheel (3) is provided with an annular recess (36) in the edge region of each side face (31).

11. Volumeter according to claim 9, characterised in that each side face (31) of the gearwheel (3) is bevelled between the locating face (32) and the edge.

12. Volumeter according to claim 2, characterised in that each gearwheel (3) is axially supported by means of buffer disks (5) which are disposed between the faces (41) of the pressed-in bearing bush (4) and the faces (11, 21) of the housing (1) and the cover (2).

13. Volumeter according to claim 12, characterised in that the bearing bush (4) in an axial direction is of a two-part construction with a defined clearance between the bush parts (44, 45).

14. Volumeter according to claim 3, characterised in that each gearwheel (3) is axially supported by means of buffer disks (5) which are disposed between the side faces (31) of the gearwheel (3) and the faces (11, 21) of the housing (1) and the cover (2), with the side faces (31) of the gearwheel (3) or the faces (11, 21) of the housing (1) and the cover (2) having an annular recess (36, 16, 46) for receiving the buffer disks (5).

15. Volumeter according to one of claims 12 to 14, characterised in that compensating disks (6, 7) are provided below the buffer disks (5).

16. Volumeter according to one of claims 12 to 15, characterised in that the buffer disks (5) are force-lockingly connected to the housing (1) or the bearing pin (9).

17. Volumeter according to one of claims 12 to 15, characterised in that the buffer disks (5) are form-lockingly connected to the housing (1) or the bearing pin (9).

18. Volumeter according to one of claims 1 to 17, characterised in that the parts of the bearing are made of hard or hardened materials.

19. Volumeter according to claim 18, characterised in that the parts of the bearing are additionally treated with extremely hard anti-abrasion layers having good sliding properties.

## Revendications

1. Compteur volumétrique dont le mécanisme est constitué par une paire de roues dentées, une chambre de roue (12) pour chaque roue (3) d'une paire de roues dentées munie d'un palier ayant peu de jeu étant formée dans le carter (1) du compteur fermé par un couvercle (2), caractérisé en ce que chaque palier est réalisé en tant que palier lisse combiné travaillant à la fois radialement et axialement, le positionnement axial s'effectuant avec un jeu réglé défini.

2. Compteur volumétrique selon la revendication 1, caractérisé en ce que chaque roue dentée (3) est positionnée radialement au moyen d'un axe de palier (9) enfoncé dans le carter (1) et traversant la chambre de roue (12), et d'un coussinet (4) enfoncé dans la roue dentée (3) et entourant l'axe de palier (9).

3. Compteur volumétrique selon la revendication 1, caractérisé en ce que chaque roue dentée (3) est positionnée radialement au moyen d'un axe de palier (9) enfoncé dans le carter (1) et traversant la chambre de roue (12) et d'un alésage de palier (33) prévu dans la roue dentée (3) et entourant l'axe de palier (9).

4. Compteur volumétrique selon la revendication 2, caractérisé en ce que chaque roue dentée (3) est positionnée axialement avec les faces frontales (41) du coussinet (4) voisines des côtés frontaux (11, 21) du carter (1) et du couvercle (2).

5. Compteur volumétrique selon la revendication 4, caractérisé en ce que chaque face frontale du coussinet (4) entourant l'axe de palier (9) est réalisée en tant que surface d'appui (42) en forme de couronne circulaire.

6. Compteur volumétrique selon la revendication 5, caractérisé en ce que chaque face latérale du coussinet (4) comporte, dans la zone de bord, un évidement annulaire (46), dont le plan s'étendant parallèlement à la face frontale coïncide avec la face latérale associée (31) de la roue dentée (3).

7. Compteur volumétrique selon la revendication 5, caractérisé en ce que chaque face frontale du coussinet (4) est biseautée entre la surface d'appui (42) et le bord jusqu'au plan déterminé par la face latérale associée (31) de la roue dentée (3).

8. Compteur volumétrique selon la revendication 3, caractérisé en ce que chaque roue dentée (3) est positionnée axialement avec ses faces latérales (31) appuyant contre les côtés frontaux (11, 21) du carter (1) et du couvercle (2).

9. Compteur volumétrique selon la revendication 8, caractérisé en ce que chaque face latérale (31) de la roue dentée (3) entourant l'axe de palier (9) est réalisée en tant que surface d'appui (32) en forme de couronne circulaire.

10. Compteur volumétrique selon la revendication 9, caractérisé en ce que chaque face latérale (31) de la roue dentée (3) comporte, dans la zone de bord, un évidement (36) en forme de couronne circulaire.

11. Compteur volumétrique selon la revendication 9, caractérisé en ce que chaque face latérale (31) de la roue dentée (3) est biseautée entre la surface d'appui (32) et le bord.

12. Compteur volumétrique selon la revendication 2, caractérisé en ce que chaque roue dentée (3) est positionnée axialement au moyen de disques d'usure (5) qui sont disposés entre les faces frontales (41) du coussinet (4) enfoncé et les côtés frontaux (11, 21) du carter (1) et du couvercle (2).

13. Compteur volumétrique selon la revendication 12, caractérisé en ce que le coussinet (4) est divisé en deux dans le sens axial et que les parties de coussinet (44, 45) sont distantes d'une distance définie.

14. Compteur volumétrique selon la revendication 3, caractérisé en ce que chaque roue dentée (3) est positionnée axialement au moyen de disques d'usure (5), qui sont disposés entre les faces latérales (31) de la roue dentée (3) et les côtés frontaux (11, 21) du carter (1) et du couvercle (2), les faces latérales (31) de la roue dentée (3), ou les côtés frontaux (11, 21) du carter (1) et du couvercle (2) comportant un évidement annulaire (36, 16, 46) pour recevoir les disques d'usure (5).

15. Compteur volumétrique selon l'une des revendications 12 à 14, caractérisé en ce qu'on prévoit des disques de compensation (6, 7) sous les disques d'usure (5).

16. Compteur volumétrique selon l'une des revendications 12 à 15, caractérisé en ce que les disques d'usure (5) sont reliés mécaniquement au carter (1) ou à l'axe de palier (9).

17. Compteur volumétrique selon l'une des revendications 12 à 15, caractérisé en ce que les disques d'usure (5) sont reliés par coopération de formes au carter (1) ou à l'axe de palier (9).

18. Compteur volumétrique selon l'une des revendications 1 à 17, caractérisé en ce que les parties du palier sont en matériaux durs et/ou trempés.

19. Compteur volumétrique selon la revendication 18, caractérisé en ce que les parties du palier reçoivent un traitement supplémentaire avec des surfaces d'usure extrêmement dures ayant de bonnes qualités de glissement.

31 3 4 5 23 9 8 2 11,21

5 6 7 8 2

3

4

Einzelheit
Fig. 1b

31 41 5 1 13 8 12

Fig. 1a

31 3 44 5 23 9 45 2 11,21

31 41 5 1 13 12

Fig. 1c

Meßwerk

Fig. 1d

Fig. 2a

Fig. 2b

Fig. 3a

Fig. 3b

Fig. 3c

Fig. 3d